# EUROPEAN PATENT SPECIFICATION

(11) **EP 3 447 610 B1**
(45) Date of publication and mention of the grant of the patent: **31.03.2021**
(21) Application number: 17187245.0
(22) Date of filing: 22.08.2017
(51) Int. Cl.: G06F 3/01

(54) **USER READINESS FOR TOUCHLESS GESTURE-CONTROLLED DISPLAY SYSTEMS**
BENUTZERBEREITSCHAFT FÜR BERÜHRUNGSLOSE GESTENGESTEUERTE ANZEIGESYSTEME
DISPONIBILITÉ DE L'UTILISATEUR POUR SYSTÈMES D'AFFICHAGE COMMANDÉE PAR GESTE SANS CONTACT

(43) Date of publication of application: 27.02.2019
(60) Divisional application: 20202016.0
(73) Proprietor: ameria AG, 69124 Heidelberg (DE)
(72) Inventor: METTER, Albrecht, 69120 Heidelberg (DE); SAVOTIN, Artem, 69120 Heidelberg (DE); GOETZ, Marcus, 69120 Heidelberg (DE)
(74) Representative: Mader, Joachim

(56) References cited:
- US-A1- 2011 107 216
- US-A1- 2011 304 632
- US-A1- 2014 232 816
- US-A1- 2015 033 192
- KRAY CHRISTIAN ET AL: "Natural Interaction with Video Environments Using Gestures and a Mirror Image Avatar", 30 August 2015 (2015-08-30), ICEC 2006; [LECTURE NOTES IN COMPUTER SCIENCE; LECT.NOTES COMPUTER], SPRINGER INTERNATIONAL PUBLISHING, CHAM, PAGE(S) 387 - 394, XP047319095, ISSN: 0302-9743 ISBN: 978-3-642-01969-2 [retrieved on 2015-08-30] * paragraphs [0003], [0004] *

## Description

### 1. Technical Field

The present invention generally relates to gesture-controlling systems, and more particularly to touchless gesture-controlled display systems, as well as methods and computer programs for operating such systems.

### 2. The prior art

Nowadays, people are more and more often confronted with digital signage and interactive signage systems, such as advertising panels, digital shelf panels etc. Typically, these are equipped with a touch sensor, which allows the user to interact with the signage in order to perceive different content. As an example, a customer in an automotive showroom could browse the model range on a touch-based screen. As another example, a customer in a shopping mall could approach a large stationary touch display and look up the location of a particular shop by providing touch inputs on the display.

Such touch-based systems are generally well-accepted by users because the man machine interface is intuitively known from the ubiquitous smartphones available nowadays. However, it turned out that touch systems have at least the following exemplary disadvantages:
A first exemplary disadvantage of touch-based systems is that the user is standing comparatively close to the display when interacting, thus - depending on the screen size - the user is required to step back and forth in order to see the content properly. This is especially the case for large displays.

A second exemplary disadvantage of touch-based systems is that due to their nature, touch screens get dirty rather fast (fingerprints, fat etc.) and are therefore required to be cleaned.

A third exemplary disadvantage is that people - especially in the US or China - are concerned about the hygiene of a touch screen because "you do not know who touched it before". This becomes also apparent because many touch-based screens have a disinfectant dispenser standing next to it.

In order to overcome this barrier, it is possible to use devices based on touchless gesture control. Essentially, touchless gesture controlled systems enable users to interact with content from a distance of typically 1 to 2.5 meters without any touching of the device. This also provides for a broader and more direct view on large screen displays without the need of stepping back and forth.

Despite the advantages of gesture-controlled systems, the technology is not yet that common. Typically, technology-sawy users know gesture control from game devices such as the Microsoft Xbox or from cars (e.g. Audi AirTouch). In other scenarios, such as the advertising and signage industry, however, gesture-controlled systems are not very common nowadays. Therefore, people often actually do not understand that they can interact with a gesture controlled system, such as an interactive panel, via gestures, but perceive the display as an ordinary passive screen or they try to apply touch gestures by tapping on the glass.

Gesture sensors may generally be used for different domains. However, in most cases the field of application only considers professional environments and the systems are based on the following two premises: First, the users are expected to be aware of the gesture-control availability. Second, the users are expected to be experienced with the usage of gesture-control. Due to these two premises, the applications typically do not offer and do not require any kind of awareness or training approach.

In contrast to professional environments, the application of gesture-control in end-user and consumer environments, such as interactive displays, is hardly common. Also, the concepts of software applications often do not require an explicit interaction of the user but just his or her basic presence.

One example for such an application is the "Interactive Projection Mapped Water Wall" (see https://www.youtube.com/watch?v=sCL7WJt5gx8). The user can stand at any arbitrary position and perform random movements that result in arbitrary visual effects. However, no proper positioning of the user is included, and not required.

One of the most popular gesture sensors in the gaming industry is the Kinect 360 as well as its successor Kinect One. Both are part of the XBOX 360 / XBOX One. In general, the approach of these systems is that several manuals are provided in order to explain gesture-control. However, these are not included in the actual application (e.g. the game), but on a website or in a printed manual. These manuals contain some static visualization of the concept of positioning the user. However, one readily apparent drawback of this approach is that - in the case of interactive displays, in particular in systems in public places directed to a priori unknown passers-by - people do not want to read manuals or have the time to read them.

US 9,195,345 B2 describes an approach that considers the idea of a visual feedback for gesture-controlled devices. However, this document only considers the visualization of static control signals. Yet, it is not clear for the user that he or she is actually able to control the application via gestures.

EP 3 043 238 A1 describes a similar approach. The drawback here is also the display of static acknowledgement of the gesture of the user. The approach only considers the response that a dedicated gesture has been detected but it does not consider the specific awareness-raising and training of the user.

The gesture-controlled rear-projection system "Virtual Promoter" of the applicant, which is described in EP 2 849 442 B2, also considers a different approach so far - the so-called position feedback. This approach focuses more on the relation between a focus area, i.e. the area in front of the display area where the user has to stand in order to interact, and the real position of the user. In prior systems of the applicant, the user is visualized on the display as a small and static icon that represents the user and the focus area is visualized as a virtual marker on the display. Although the icon representing the user moves along with the user, it remains static and small. Experience with the system in the field has shown, however, that both the visualization and technical implementation do not allow for an easy perception that the system can be controlled via touchless gestures and it has not yet been able to overcome the problem of raising awareness for the gesture-control functionality.

To summarize, the main disadvantages of the prior art are the lacking usability as well as the lacking awareness of gesture controllability. Typically, people do not understand that the interactive display is in fact interactive and that they can control it via gestures. Furthermore, even if some level of interactivity is perceived by the user, they typically do not map themselves on the screen, and thus do not understand that they can control the application via gestures. Further, it remains hidden to the user how he can interact with the application. Furthermore, the implementation of existing approaches is always an individual task per project or per application, thus scalability and standardization is not feasible.

US 2011/0304632 A1 discloses techniques for interacting with a user interface via feedback provided by an avatar. The avatar can move relative to the user interface control (e.g. either closer to or farther from the user interface control).

US 2014/0232816 A1 discloses a tele-immersive environment that provides interaction among participants using a mirror metaphor.

It is therefore the technical problem underlying the present invention to provide a touchless gesture-controlled system with an improved man-machine interface which allows users to efficiently control and provide inputs to the system, thereby overcoming the disadvantages of the prior art at least in part. In particular, there is a need for making the user aware of the possibility to control the gesture-controlled system in the first place, and then to efficiently demonstrate its usage and thereby train the user.

### 3. Summary of the invention

The present invention is defined in the independent claims. Advantageous modifications of embodiments of the invention are defined in the dependent claims. In its most generic form, the present invention provides a touchless gesture-controlled display system. The system may comprise a display for displaying one or more virtual user representations each corresponding to a user located nearby the display.

In one aspect not covered by the claimed invention, the system may be configured for increasing the size of the virtual user representation when the corresponding user moves towards the display and for decreasing the size of the virtual user representation when the corresponding user moves away from the display.

Accordingly, the user is virtually represented on the display of the system by a virtual user representation (also referred to as "avatar" or "virtual avatar"). If more than one user is present near the system, the display preferably displays an individual avatar for each user. Importantly, the size of the avatar changes in relation to the distance between the user and the display, i.e. the avatar's size increases when the distance decreases and vice versa. The inventors have found that by using such a "mirror metaphor", the user instinctively recognizes that it is him who is virtually represented on the display of the system. Thus, the user recognizes immediately that the system is interacting with him and that the content on the display is not only a self-induced arbitrary image. Therefore, the user is directly aware that he can interact with and control the system, i.e. that the system does not only provide passive one-directional information but provides a man-machine interface for the user.

Furthermore, the inventors have found that by using the mirror metaphor, also false inputs, such as touch inputs, can be avoided as the users perceive on their way towards the system (what they perceive as a touch display) that the system is not deemed to be controlled via touch gestures, as they see themselves approaching the display. Thus, the users perceive that the display is not for touching, just as a mirror is. This way, the mirror metaphor can also help to avoid false inputs to the touchless gesture-controlled system and therefore help to provide an improved man-machine interface.

The system may also be configured for moving the virtual user representation on the display according to the user's movement. This way, the mirror metaphor is even more prominent, as not only the distance to the gesture-controlled system is reflected by the display of the device, but also the physical location of a person passing by with respect to the system. This way, the user may even more quickly recognize that the system is interacting with him and that the content on the display is not a self-induced arbitrary image.

In yet another aspect of the invention, the system is further configured for reflecting a movement of the user's head, such as nodding and/or moving to the side, on the virtual user representation. By means of reflecting head movements, the virtual representation of the user becomes even more realistic and more compliant to the mirror metaphor known by the user, thus enabling for an immediate recognition that the system interacts with the user.

In another aspect of the invention, the system is further configured for displaying a virtual control position and further configured for displaying a visual indication for directing the user to a position from where the system can be controlled by the user which corresponds to the virtual control position. Preferably, the visual indication comprises a graphical element which connects the virtual user representation's base to the virtual control position. Preferably, the visual indication comprises one or more arrows, more preferably a plurality of arrows. This way, the system indicates to the user where the user is supposed to be located in order to take over the control of the system, thus replying to the system's interaction with the user. In other words, the user is urged by the graphical appearance of the display to make his avatar coincide with the virtual control position. Once the real user moves so as to move his avatar onto the virtual control position, this serves as a control input to the system reflecting that this user is now able to control the system.

In yet another aspect not covered by the claimed invention, the system is further configured for entering a training mode when the user is detected at a position from where the system can be controlled by the user. Preferably, the system is configured for simultaneously displaying a plurality of virtual user representations corresponding to a plurality of users and for entering the training mode when one of the plurality of users is detected at a position from where the system can be controlled by the user. By entering a training mode when the user (or one of the users) is detected at a position from where the system can be controlled by the system, the user is enabled to learn how to interact with the system. This is particularly advantageous for unexperienced or first-time users.

Furthermore, by simultaneously displaying a plurality of virtual representations corresponding to a plurality of users, the mirror metaphor can be applied by the system even more consequently, thus enabling the plurality of users to immediately understand that the system is interacting with them. At the same time, the graphical interface makes it clear to the users which one is in charge of controlling the system (i.e. the user whose avatar "stands" on the virtual control position).

It shall be appreciated that the system, instead of entering the training mode, may also enter a control mode (which will be explained in more detail further below) straight away once the user (or one of the users) is detected at a position from where the system can be controlled by the user.

In another aspect not covered by the claimed invention, the system, after entering the training mode and/or control mode, is further configured for removing the visual indication from the display and/or for changing the color of the virtual user representation. This way, the system signals to the user that he already undertook the first step of interaction with the system successfully.

In yet another aspect of the invention, the system is further configured for displaying one or more hands and/or arms of the virtual user representation corresponding to a physical location of the hands and/or arms of the user, and further configured for mapping the user's hand and/or arm movement. Preferably, the system is further configured for mapping the user's shoulder, elbow and hand movement. This way, the system shows to the user that his hands are of importance for the upcoming interaction between the system and the user. Furthermore, this can be further emphasized by applying the mirror metaphor to the user's shoulder, elbow and hand movement, thus achieving a more realistic mirroring provided by the system.

In another aspect of the invention, the system is further configured for displaying at least one graphical control element, such as a button. Preferably, the system is configured for displaying two graphical control elements, each graphical control element being displayed above a corresponding hand of the virtual user representation. This way, the training mode is started and interaction between the user and the system is further enabled by means of the at least one graphical control element. Further, the users understand that they are urged to move their hands as the displaying of an appearing graphical control element corresponds to a pop-up window as known by virtually all users, even those who use the system for the first time.

In yet another aspect of the invention, the system is further configured for displaying at least one virtual indication urging the user to select the at least one graphical control element. The at least one virtual indication preferably comprises a graphical element which connects a hand of the virtual user representation to the at least one graphical control element. The visual indication preferably comprises one or more arrows, more preferably a plurality of arrows. This way, the system teaches the user how to interact with the system in case that the user has not provided an immediate feedback to the system. This is preferably clarified by means of the virtual indication connecting a hand of the user to the at least one graphical element. Thus, the connection between the user's hand in the real world and its indication for the control of the system is further clarified.

In another aspect not covered by the claimed invention, the system is further configured for entering a control mode in which the display displays an application. Preferably, when entering the control mode, the system is preferably further configured for shrinking the virtual user representation. This way, the user has been taught how to interact with the system. Thus, an application can be displayed on the display of the system with which the user has learned to interact. The achievement of the user having learned how to interact with the system may be preferably further acknowledged by shrinking the avatar. This way, the user realizes that the training is now over and that he is ready to interact with and control the application displayed on the display of the system.

In yet another aspect of the invention, the touchless gesture-controlled display system is useable in public places such as shopping windows, stores and/or trade shows. It is particularly advantageous to let users use the system in public places as in those places it is highly likely that users are first-time users of a gesture controlled system, or at least unexperienced users.

In another aspect, the touchless gesture-controlled display system is a stationary system. This way, the system may be employed stationary at locations of particular interest.

In another aspect, the touchless gesture-controlled display system is comprised in a single housing. This way, the system is easily transportable and/or more appealing to users. Further, due to the integral housing, the system components cannot be stolen or vandalized, which is important for systems in public places.

In another aspect, the touchless gesture-controlled display system comprises a rear-projection system. This way, the system can also be implemented on touchless gesture-controlled devices as those described in EP 2 849 442 B2 of the applicant.

In yet another aspect, the display comprises a display area with a height of approximately at least 32 inch, more preferably approximately at least 60 inch. This way, users may experience the particular advantage that they can easily perceive all of the display without being positioned too closely to it. It shall be noted that any display size is possible from a technological point of view. However, in practice there are two factors which should be considered. Firstly, everything which is smaller than 32 inch is hardly ever controlled by gestures because the content is just too small and the user stands too close. Secondly, one of the key characteristics of the product "Virtual Promoter" by the applicant is the fact that a virtual person is displayed in order to interact with the user. Of course, a virtual person / avatar can generally be displayed in any size, but the users then tend not to perceive it as a person but rather a video or cartoon. Therefore, the avatar / person needs is ideally real-size or nearly real-size. The "smallest" avatar used in systems of the applicant is about 1.4 m high, and thus a screen of about 60 inch is preferred.

Regarding an upper limit, there is none from a technical perspective. However, the following two factors need to be considered in terms of height: Firstly, the higher the content is, the harder it is to perceive it (e.g. if there is content in 3 m height above the ground, people will probably not read it). Secondly, typical gesture control sensors limit the distance of the user to the screen to a maximum of 4 m. Thus, if the "hotspot" / control area is configured to 4 m, a user can probably look at 3 m max. In summary, thus, the upper limit is a matter of concept but less one of technology.

In another aspect of the invention, the system further comprises at least one of: a sound system for providing audio instructions, a gesture control module for enabling the one or more users to control the system with touchless gestures, a gesture sensor, preferably for generating RGB and/or depth images a software module for processing gesture sensor data and for detecting users and/or user gestures, a software module for generating a skeleton and/or silhouette of the user, and/or a software module for reacting to detected gestures. Such components can be used in order to further improve the experience provided to a user by the gesture-controlled system.

In yet another aspect not covered by the claimed invention, the virtual user representation reflects gender, age and/or ethnicity of the corresponding user. This way, the mirror metaphor can be employed even more consequently, which enables the user to immediately recognize that the system is interacting with him and that the content on the display is not a self-induced arbitrary image.

Further, the invention also provides a method for operating a touchless gesture-controlled display system as explained above. Lastly, a computer program comprising instructions for implementing the method is also provided.

### 4. Short description of the drawings

In the following detailed description, presently preferred embodiments of the invention are further described with reference to the following figures:
Fig. 1: A flow chart illustrating an overall method of controlling a touchless gesture-controlled system according to an embodiment of the invention;
Fig. 2: A general setup of a system according to an embodiment of the invention;
Fig. 3: A display for guiding a virtual user representation to a virtual control position according to an embodiment of the invention;
Fig. 4: A user standing on a virtual control position according to an embodiment of the invention;
Fig. 5: A system in training mode according to an embodiment of the invention;
Fig. 6: A display of graphical control elements according to an embodiment of the invention;
Fig. 7: A user interacting with the system in a training mode according to an embodiment not covered by the claimed invention;
Fig. 8: A system in control mode according to an embodiment not covered by the claimed invention;
Fig. 9: A display with multiple users according to an embodiment not covered by the claimed invention.

### 5. Detailed description of preferred embodiments

In the following, presently preferred embodiments of the invention are described with respect to a touchless gesture-controlled display system. The approaches disclosed herein generally serve for rising awareness of people that a screen is gesture-controlled and provides instructions how they can interact with and control the gesture-controlled system.

Embodiments of the invention build upon a concept named "User-Readiness". In brief, this approach extends the previously described position feedback approach in prior systems of the applicant by using appropriate visualizations that help users to understand the availability of gesture-control as well as to train them in the usage of gesture-control for interactive displays. That is, User-Readiness allows teaching users themselves in order to understand that a system is gesture-based.

User-readiness presents a solution for making users aware of the fact that they can actually interact with a touchless gesture-controlled system (e.g. a screen, projection) purely via gestures but not via touch. User-Readiness introduces a standard to the usage of gesture-control systems by making the user aware that he or she is actually controlling the system and/or digital application running on the system. One main technical advantage is that User-Readiness explicitly describes the functionality of a gesture-control and makes users interact with gesture-controlled devices or applications.

Gesture controllers have been developing recently from game platforms to business solutions, and companies start to integrate gesture controllers in order to implement interactive advertising channels such as mall displays or shopping windows. However, people - especially in environments where they do not intent to interact - do not realize that it is possible to control a system via touchless gestures. Instead, people tend to try using touch control. User-Readiness introduces the user to touchless gesture control and teaches him or her how to use the application. User-readiness allows to be integrated into the gesture systems to extend the possibilities and a delivers standard approach of making users learn how to use gesture controlling.

User-Readiness also makes it possible to associate a real human with the gesture control via a virtual representation (hereinafter *"avatar"*), which preferably reflects user motions in a three-dimensional manner. It is possible to integrate the invention into any standard application that uses gesture control functionality. The invention unifies the way to introduce gesture-control and to teach users in the usage of gesture-controlled interactive displays.

### General system overview

Embodiments of the invention may comprise different parts, such as hardware components, software components and/or specific processes.

Additionally, embodiments of the invention may comprise any subset of the following features:
- a gesture sensor for generating RGB and depth images,
- a (digital) display for the visualization of (dynamic) content,
- a software component for processing the gesture sensor data in order to detect users and user's gestures,
- a software component which generates a skeleton and/or silhouette of the user,
- a software component which reacts on gestures in a predefined way and visualizes it on the display,
- a representation and visualization of a user as a virtual avatar which reflects the user's head and hand motions,
- a mapping / mirroring of user's motion and physical location on a three-dimensional virtual space in order to physiologically connect user's understanding of the usage of interactive display,
- a simultaneous visualization of virtual helpers and virtual palms in order to teach the user how to control the interactive display via gestures and/or a hand cursor,
- a support of multiple users in order to display multiple virtual avatars and to mirror their motion accordingly,
- a sound system and/or loudspeakers in order to provide verbal instructions and guidance,
- an appealing visualization of the virtual avatar in order to represent different genders, ages, races etc..

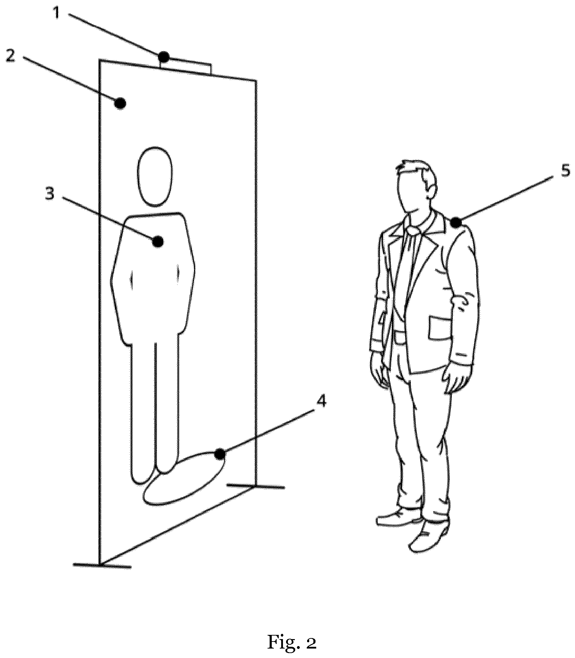

Fig. 2 illustrates an exemplary touchless gesture-controlled system according to one embodiment in which the "User Readiness" approach can be implemented. In the example of Fig. 2, the system comprises the following parts:
A gesture control sensor 1 which can detect and/or track humans. Suitable sensors are available in different products and/or solutions, such as the Kinect 360 of Kinect One of Microsoft.

A digital display 2, e.g. a screen, one or more monitors, an image projected by one or more projectors, a rear-projection foil irradiated by a rear-projection device etc., which displays graphical content. Such displays are well known and a great variety of products is available.

A virtual user representation ("avatar") 3, which reflects motions and/or behavior of a user 5 standing in front of the display 2. In contrast to other applications, which typically map user's behavior to an artificial or fictional avatar, the invention preferably utilizes an avatar which clearly represents a person without actually distinguishing between man and woman.

A virtual control position ("virtual hotspot") 4, which reflects the ideal point of control for the user 5 (working area). This virtual point 4 is mapped to a real-world physical point which represents the point of control and it is required that the virtual avatar 3 is located on top of this hotspot 4 in order to make the user 5 interact with the system. This component also differs from other applications, which typically do not rely on a virtual button but simply place a physical object on the ground (e.g. a sticker or a plate).

A user 5 who is standing in front (or passing by) the display 2. It will be appreciated that the user 5 is required only to use the system, but is not needed for the implementation of the invention.

Not depicted in Fig. 2 is a processing component (e.g. an information handling system of any kind, e.g. a computer or laptop) which is connected to both the display 2 and the gesture sensor 1. Such an information handling system may be responsible for the actual computations and/or for broadcasting the content of an application to be displayed on the display 2.

It will be appreciated that all sorts of explanations etc., as will be described in the following, can be implemented visually, e.g. as a headline and/or text label on the display 2, and/or verbally as voice output, either of the virtual avatar 3 and/or from the offset and/or a combination of the foregoing. It does not matter for the invention which one of these approaches is applied but it may be preferred that proper explanation is included in corresponding systems.

### General "User Readiness" flow sequence

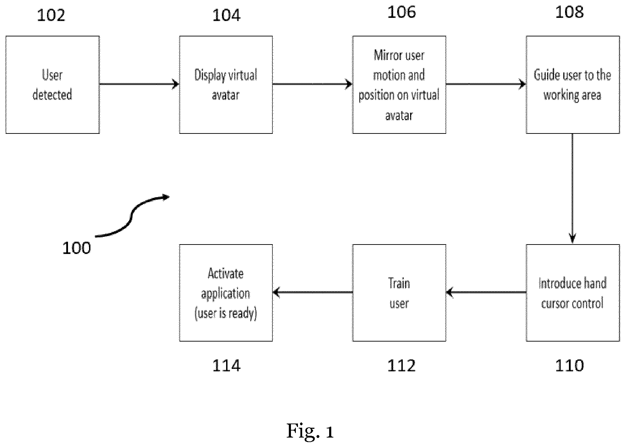

Fig. 1 illustrates a method 100 of an exemplary embodiment of the "User-Readiness" approach which combines all of the advantageous aspects of the invention. It should be noted, however, that embodiments pf the invention may also comprise only parts of the process, which can be implemented independent of each other.

The method may start at step 102 by detecting the user. In step 104, the method may display a virtual avatar on the display of the underlying system. At step 106, the method may mirror the user's motion and/or position on the avatar. In step 108, the method may guide the user to the working area (the location from where the user can interact with the system). In step 110, the method may introduce hand cursor control, e.g. by familiarizing the user that his hands are of particular importance to control the system. In step 112, the user may be trained by the system, e.g. by entering a training mode. If all or some of the previous steps may have been successful, the method may activate an application, as the user is now ready for the experience at step 114.

Preferred embodiments of the above steps will now be described in more detail:
When passing by the display 2, the gesture sensor 1 detects the (potential) user 5 and technically tracks his or her position (see step 102 of Fig. 1), and displays a virtual avatar 3 corresponding to the user 5 (see step 104 of Fig. 1).

### Mirror user motion and/or position on virtual avatar (step 106)

The system maps the location and/or movement of the user 5 to the virtual avatar 3, thus the avatar 3 always moves in the same direction (and speed) as the user 5. This movement happens in a three-dimensional space, so not only the movement along the display 2 is tracked, but also the actual distance of the user 5 to the display 2. The movement is mapped to the avatar 3 in a way that the size of the avatar 3 actually represents the distance of the user 5 to the screen 2. That is, if the user 5 is standing close to the display 2, the avatar 3 is bigger than for a user 5 who is standing far away. The avatar 3 maps the position of the user 5 in the real world to the position in the virtual world and to due this mapping, the user 5 actually perceives that he or she represents the virtual avatar 3.

Other gesture-based systems typically only react on the presence and movement of a user (e.g. playing a sound when passing-by) or let the user control a fictional avatar on a fixed position. The three-dimensional mapping of a user's behavior and movement to a virtual avatar 3 is one of the key factors of the present invention.

Furthermore - in contrast to other approaches - the movement of the user 5 is preferably also reflected on the head of the avatar 3, i.e. when the user 5 nods or moves his/her head to the side, this movement is also performed by the virtual avatar 3. This gives the user 5 an even clearer understanding that the display is actually a *"mirror"* making the user 5 understand that the virtual avatar 3 is him or her.

### Guide user to working area (step 108)

The invention does not require a physical marker or sticker for defining the optimal working area. In contrast, embodiments of the invention provide a virtual marker 4 on the display 2 ("virtual control position" 4), as illustrated in Fig. 2. This has the advantage that physical markers, which get easily worn or removed completely over time, in particular in public places, are avoided.

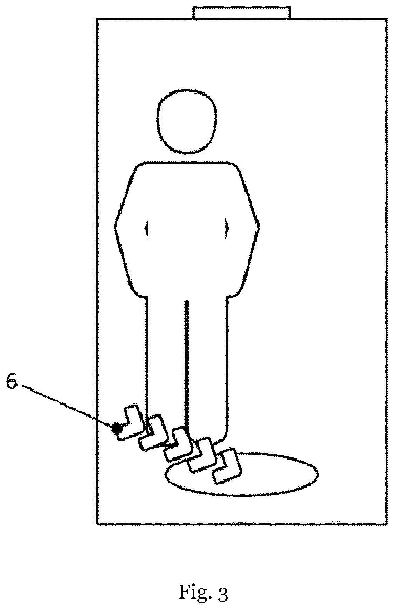

In combination with the three-dimensional movement of the virtual avatar 3, the system guides the user 5 to the actual working area. As illustrated in Fig. 3, this may be achieved by one or more visual indications 6. The animated arrow shown in Fig. 3 according to a preferred embodiment of the invention, is fixed on the center of the virtual hotspot 4 and the other end is connected to the virtual avatar 3. That is, as soon as the avatar 3 moves in the 3D-space, also the arrow 6 moves accordingly whereas the target destination of the arrow 6 always remains on the virtual hotspot 4. This arrow 6 visually shows the user 5 what he or she has to do in order to move to position oneself on the working area (i.e., position the virtual avatar on the virtual hotspot). In contrast to other approaches - which do not have this kind of visual indicator - the arrow 6 clearly visualizes where the user 5 has to move.

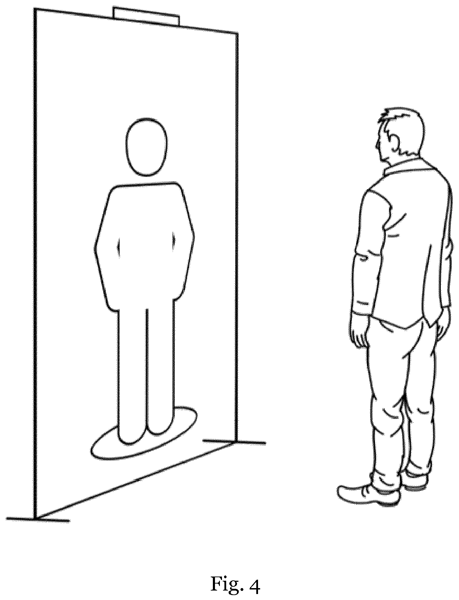

Fig. 4 shows the user 5, more precisely his avatar 3, standing on the virtual control position 4. As soon as the user 5 positioned him or herself on the working area (i.e. the virtual avatar 3 on the virtual control position 4), the visual indication 6 (e.g. the animated arrow as shown in Fig. 3) disappears, indicating that the user 5 positioned him- or herself properly. In order to emphasize this, the color of the virtual avatar 3 may also change. The movement of the head of the user 5 may still be mapped to the virtual avatar 3, still emphasizing that the virtual avatar 3 represents the user 5.

### Introduction to hand cursors in training mode (step 110)

Since the user 5 is now positioned properly in the working area, the first step for gesture control is completed and the user 5 can use the system via touchless gestures. However, many users are not familiar or experienced with touchless gesture control and lack experience. In order to demonstrate the possibility of gesture control and to enable them without frustration, user-readiness considers another component: teaching gesture control.

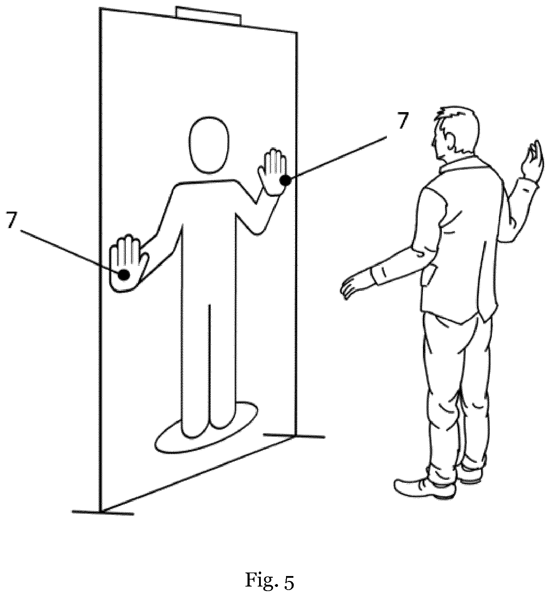

Fig. 5 shows the system in a training mode. The virtual avatar 3 may change slightly and hands 7 may appear as a part of the body of the virtual avatar 3. Those hands 7 represent the hands of the interacting user 5, thus hand and arm movement of the user 5 is directly mapped and mirrored by the virtual avatar 3. That is, the full movement of both arms (including shoulder, elbow and hand) of the user 5 is preferably mapped on the virtual avatar 3. All motions of the user 5 are repeated by the virtual avatar 3 and the user 5 associates himself and his hands with the avatar 3.

Essentially, the invention makes the user 5 understand that he can control a mouse cursor 7 via his hands - both left and right handed as shown in the example of Fig. 5. This is also a differentiation to other avatar-based solutions in which such a "transformation" of the user typically does not happen, which further emphasizes the innovation.

### Display guidance for hand movement in training mode (Step 112)

In order to consume content, touchless gesture-based interactive displays require a hand-cursor which is controlled via the hands of the user 5. As described above, the invention demonstrates that the hand movement of the user 5 is mirrored to the movement of the virtual avatar 3, thus the user 5 understands that he or she controls the virtual avatar 3.

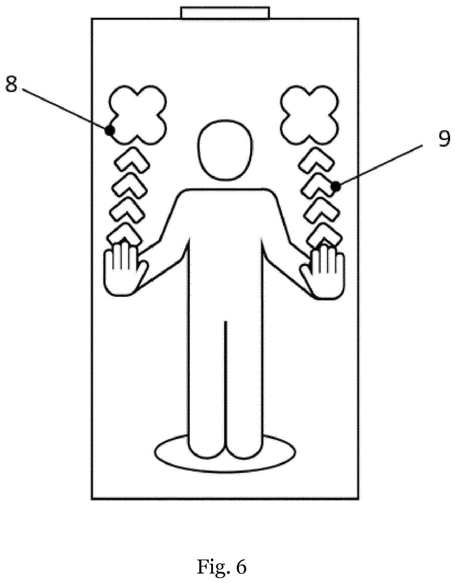

In order to train the usage of this hand-cursor 7, the invention introduces an easy and straight forward approach, shown in Fig. 6. Fig. 6. shows the system in training mode.

Above the virtual avatar 3, two graphical control elements 8 may appear, such as buttons. Due to their visualization and/or caption, it is clear that the user 5 can and should press one of them. This may further be emphasized by additional indications, such as by audio instruction or the like (see above).

Generally, the user 5 now understands that he or she can control the virtual avatar 3 and that there are buttons 8 which should be pressed. Two animated arrows 9 (or other visual indication) may be visualized on the display 2. One of the ends of each arrow 9 may be fixed on the buttons 8 (separating left and right) and the other end is connected to the hands 7 of the virtual avatar 3 (similar to the approach of the animated arrow described earlier). That is, as soon as the virtual avatar 3 moves (i.e. the user 5 moves his or her hands), the arrows 9 move accordingly in the 3D-space as shown in Fig. 6.

Due to the visualization, animation and/or movement, the user 5 understands how to control the virtual avatar 3 and he or she also perceives that the buttons 8 are the target where to move one of the hands 7. The user 5 intuitively follows the instruction and understands how to use his or her hand in the real world as a hand-cursor 7 in the virtual world. This allows an instant learning which rapidly enables the user 5 to use gesture-control for interactive displays.

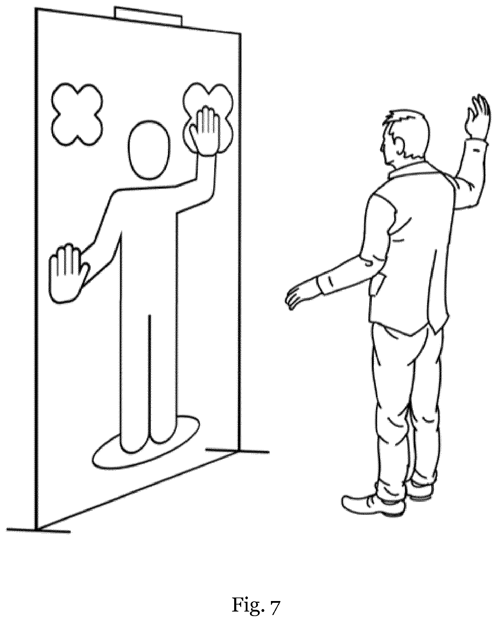

Fig. 7 shows a user 5 interacting with the system in a training mode.

As can be seen, eventually the user 5 moves the hand-cursor 7 over one of the graphical control elements 8, such as the two buttons. Typically, a right-handed person will activate the right button 8 whereas a left-handed person will activate the left button 8.

### User-Readiness in control mode (step 114)

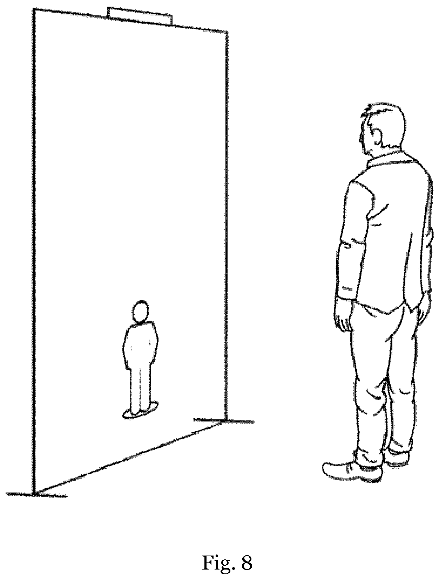

After training how to use gesture-control, the user 5 eventually activated a graphical control element 8, such as at least one of the two buttons. This activity demonstrates the successful execution of User-Readiness and proves that the "user is ready" for a gesture-controlled interactive display. Thus, the system may enter a control mode, as shown in Fig. 8.

Upon entry into the control mode, the user 5 may receive a success message (either visually or verbal, or both) and an application may be started. Examples of such applications are without limitation:
- a window shopping application
- an application for learning about consumer products, including features such as scrolling through a list of products, displaying detail information of products, take pictures with the brand's mascot ("photo box") and/or play a game
- an application for informing automotive customers and/or prospects about a mobile showroom app which gives them access to special data and events
- an application for informing customers about products and services of a bank

Meanwhile, the virtual avatar 3 may shrink to a considerably smaller size in order to not cover the content of the application, as depicted in Fig. 8.

However, the small virtual avatar 3 may be still present in order to always remind the user 5 that the user actually controls the application via gestures - this is also a difference and advantage compared to other approaches. In certain embodiments, the small virtual avatar 3 may still mirror the user's gestures in order to remind the user 5 that he is in control of the system.

### Visualization of multiple users

Touchless gesture-controlled systems are particularly advantageous in busy environments, such as shopping malls, pedestrian areas or trade fairs. That is, in most cases there is not only one user 5 standing in front of the display but many users (some of them passing by, others standing and watching). Unless the system is in control mode, it may not yet be clear who will actually control the system.

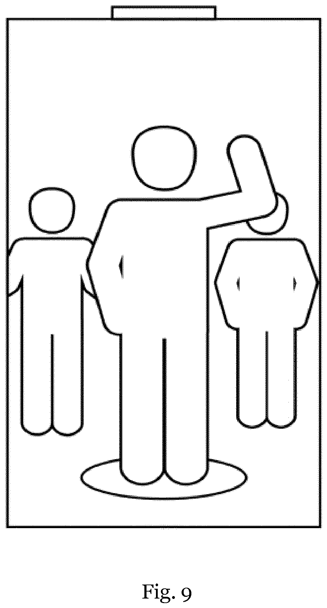

In order to overcome this problem, the invention is not limited to one user 5 but can visualize and/or track several users 5. Fig. 9 shows such a multiple user use case. The actual number of users 5 is not limited conceptually by the invention but only by the used hardware, in particular the gesture sensor 1 (e.g. the Microsoft Kinect can track up to six users).

Each user 5 is represented by a virtual avatar 3 in the 3D-space, thus the position as well as the size of the user 5 in the virtual world represents a mirroring of the real world environment. As already described previously, the motions and position of the users 5 are mapped in a 3D-manner to the virtual world, so each individual user 5 can associate him or herself with the corresponding avatar 3. As can be seen in Fig. 9, three users are standing in front the system, wherein one is standing already very close to the working area (virtual control position) whereas the other two are standing behind (potentially watching).

The concept of visualizing not only one user is also in contrast to other approaches and represents a massive advantage because the system does not limit itself to one potential user from the start but provides "equal chances" to all of them.

### Obstacles during development

Previous systems developed by the applicant did not demonstrate or train the user in the usage of touchless gesture-control. In contrast, there used to be a very small static visualization at the bottom of each application which represents a silhouette of a token. This token mirrored the location of the user in front of the display, but no further tracking or mirroring was considered. Thus, when the system was used in the field it turned out that the users simply do not understand or perceive that he or she represents this token. That is, the applicant experienced that most of the users (about 90%) simply passed by the interactive displays without actually noticing or interacting, which is emphasized by statistics of the applicant which compare the total amount of passers-by with the total number of interacting users.

This experience demonstrated that the setup and implementation is not appropriate for introducing gesture-based interaction to non-experienced users (e.g. elderly persons, first-time users etc.). Therefore, the applicant decided to develop a concept in order to cope with this problem.

During the development, the applicant faced several obstacles which had to be overcome. On the one hand, the question was how to properly visualize the virtual avatar. As described previously, the avatar was wanted to be unique but also recognizable. In addition, it needed to be clear that the virtual avatar represents the user regardless of age, gender or race. After a lot of discussions back and forth as well as several iterations and tests, the final solution as described herein has been created.

Another obstacle was the visualization of more than one user. It was not clear how a proper visualization could be included in order to raise awareness for all users without highlighting one particular user.

Another difficulty was the overall process of user-readiness. The approach had to be as simple as possible but detailed enough for properly demonstrating the functionality of gesture-control. If users do not understand it initially, they are already lost. If the process takes too long, users will be frustrated and quit prior to actually using the application. Overcoming this difficulty and developing a balanced solution was a huge obstacle, yet the most important part of the innovation.

On the other hand, one drawback of the concept of user-readiness presented herein is that the training of the users prior to the actual usage of the system / application takes some time (tests have shown that the tutorial, i.e. the above sequence of the preferred embodiment, takes users approximately 10 to 15 seconds to finish). This time requirement leads to the fact that some people already quit the interaction without actually consuming the content. This is for example the case for impatient people but also for people who are already familiar with gesture-control but do not want to be lectured by some virtual avatar. However, this drawback is accepted in embodiments of the invention, because - as soon as user-readiness is applied to real public applications - the amount of valid and relevant users will increase. In alternative embodiments, a "skip this" option is included to enable users to skip the training and go straight to the application.

The development of the invention required team work of an interdisciplinary team. Among others, the main disciplines involved into the invention were computer scientists for the implementation, psychologists and interface designers for the development of the visual perception, visual artists for the visualization of the approach and mathematicians for the proper calculation and/or mapping.

By combining the above stated disciplines, it was possible to develop a unique and innovative approach which enables users to interact with a gesture-based interactive display in an environment where they did not expect a gesture-based interactive display to be present.

## Claims

1. A touchless gesture-controlled display system, comprising:
a display (2) for displaying one or more virtual user representations (3) each corresponding to a user (5) located nearby the display (2), the virtual user representation mirroring the position of the user;
**characterized in that:**
the system is configured for displaying a virtual control position (4) and further configured for displaying a visual indication (6) for directing the user (5) to a position from where the system can be controlled by the user which corresponds to the virtual control position (4).

2. The system of claim 1,
wherein the system is further configured for moving the virtual user representation (3) on the display according to the user's movement.

3. The system according to claims 1 or 2,
wherein the system is further configured for reflecting a movement of the user's head, such as nodding and/or moving to the side, on the virtual user representation (3).

4. The system according to any of the preceding claims,
wherein the visual indication (6) comprises a graphical element which connects the virtual user representation's base to the virtual control position;
wherein the visual indication (6) preferably comprises one or more arrows, more preferably a plurality of arrows.

5. The system according to any of the preceding claims,
wherein the system is further configured for displaying one or more hands (7) and/or arms of the virtual user representation (3) corresponding to a physical location of the hands and/or arms of the user (5), and further configured for mapping the user's hand and/or arm movement, preferably for mapping the user's shoulder, elbow and hand movement.

6. The system according to any of the preceding claims,
wherein the system is further configured for displaying at least one graphical control element (8), such as a button;
wherein the system is preferably configured for displaying two graphical control elements (8), each graphical control element being displayed above a corresponding hand (7) of the virtual user representation (3).

7. The system according to claim 6,
wherein the system is further configured for displaying at least one virtual indication (9) urging the user (5) to select the at least one graphical control element (8);
wherein the at least one virtual indication (9) preferably comprises a graphical element which connects a hand (7) of the virtual user representation (3) to the at least one graphical control element (8);
wherein the visual indication (9) preferably comprises one or more arrows, more preferably a plurality of arrows.

8. The system according to any of the preceding claims,
wherein the touchless gesture-controlled display system is useable in public places, the public places being shopping windows, stores and/or trade shows; and/or
wherein the touchless gesture-controlled display system is a stationary system; and/or
wherein the touchless gesture-controlled display system is comprised in a single housing; and/or
wherein the touchless gesture-controlled display system comprises a rear-projection system; and/or
wherein the display (2) comprises a display area with a height of approximately at least 32 inch, or approximately at least 60 inch.

9. The system according to any of the preceding claims, further comprising at least one of:
a sound system for providing audio instructions;
a gesture control module (1) for enabling the one or more users (5) to control the system with touchless gestures;
a gesture sensor for generating RGB and/or depth images;
a software module for processing gesture sensor data and for detecting users and/or user gestures;
a software module for generating a skeleton and/or silhouette of the user; and/or
a software module for reacting to detected gestures.

10. The system according to any of the preceding claims,
wherein the virtual user representation (3) reflects gender, age and/or ethnicity of the corresponding user (5).

11. A method for operating a touchless gesture-controlled display system, the system comprising a display (2) for displaying one or more virtual user representations (3) each corresponding to a user (5) located nearby the display (2), the virtual user representation mirroring the position of the user, wherein the method is **characterized in that** it comprises:
displaying a virtual control position (4); and
displaying a visual indication (6) for directing the user (5) to a position from where the system can be controlled by the user which corresponds to the virtual control position (4).

12. A computer program comprising instructions for implementing the method of claim 11.

## Patentansprüche

1. Ein berührungsloses, gestengesteuertes Anzeigesystem, umfassend:
eine Anzeige (2) zum Anzeigen von einer oder mehreren virtuellen Benutzerdarstellungen (3), die jeweils einem Benutzer (5) zugeordnet sind, der sich in der Nähe der Anzeige (2) befindet, wobei die virtuelle Benutzerrepräsentation die Position des Benutzers (2) spiegelt;
**dadurch gekennzeichnet, dass**
das System zur Anzeige einer virtuellen Steuerposition (4) konfiguriert ist, um eine visuelle Indikation (6) anzuzeigen, um den Benutzer (5) zu einer Position zu leiten, von der aus das System von dem Benutzer gesteuert werden kann, die der virtuellen Steuerposition (4) entspricht.

2. Das System nach Anspruch 1,
wobei das System ferner so konfiguriert ist, dass es die virtuelle Benutzerrepräsentation (3) auf der Anzeige entsprechend der Bewegung des Benutzers bewegt.

3. Das System nach Anspruch 1 oder 2,
wobei das System ferner dazu konfiguriert ist, eine Bewegung des Kopfes des Benutzers, wie z.B. ein Nicken und/oder eine Bewegung zur Seite, auf der virtuellen Benutzerrepräsentation (3) zu reflektieren.

4. Das System nach einem der vorhergehenden Ansprüche,
wobei die visuelle Indikation (6) ein grafisches Element umfasst, das die Basis der virtuellen Benutzerrepräsentation mit der virtuellen Steuerposition verbindet; wobei die visuelle Indikation (6) bevorzugt einen oder mehrere Pfeile umfasst, mehr bevorzugt eine Mehrzahl von Pfeilen.

5. Das System nach einem der vorhergehenden Ansprüche,
wobei das System ferner konfiguriert ist, um eine oder mehrere Hände (7) und/oder Arme der virtuellen Benutzerrepräsentation (3) entsprechend einer physischen Position der Hände und/oder Arme des Benutzers (5) anzuzeigen, und ferner konfiguriert ist, um die Hand- und/oder Armbewegung des Benutzers abzubilden, vorzugsweise zum Abbilden der Schulter-, Ellbogen- und Handbewegung.

6. Das System nach einem der vorhergehenden Ansprüche,
wobei das System ferner konfiguriert ist, um mindestens ein grafisches Bedienelement (8), wie beispielsweise eine Schaltfläche, anzuzeigen; wobei das System vorzugsweise zum Anzeigen von zwei grafischen Steuerelementen (8) konfiguriert ist, wobei jedes grafische Steuerelement über eine entsprechende Hand (7) der virtuellen Benutzerrepräsentation (3) angezeigt wird.

7. Das System nach Anspruch 6,
wobei das System ferner konfiguriert ist, um mindestens eine virtuellen Indikation (9) anzuzeigen, die den Benutzer (5) auffordert, mindestens ein grafisches Steuerelement auszuwählen (8);
wobei die mindestens eine virtuelle Indikation (9) vorzugsweise ein grafisches Element aufweist, das eine Hand (7) der virtuellen Benutzerrepräsentation (3) mit dem mindestens einen grafischen Steuerelement (8) verbindet; wobei die visuelle Indikation (9) bevorzugt einen oder mehrere Pfeile umfasst, mehr bevorzugt eine Mehrzahl von Pfeilen.

8. Das System nach einem der vorhergehenden Ansprüche, wobei das berührungslose, gestengesteuerte Anzeigesystem an öffentlichen Orten benutzbar ist, wobei die öffentlichen Orte Schaufenster, Geschäfte und/oder Messen sind; und/oder
wobei das berührungslose, gestengesteuerte Anzeigesystem ein stationäres System ist; und/oder
wobei das berührungslose, gestengesteuerte Anzeigesystem in einem einzigen Gehäuse umfasst ist; und/oder
wobei das berührungslose, gestengesteuerte Anzeigesystem ein Rückprojektionssystem umfasst; und/oder
wobei die Anzeige (2) eine Anzeigefläche umfasst mit einer Höhe von etwa mindestens 32 Zoll, oder etwa mindestens 60 Zoll.

9. Das System nach einem der vorhergehenden Ansprüche, ferner umfassend mindestens eines von:
einem Tonsystem zur Bereitstellung von Audioanweisungen;
einem Gestensteuerungsmodul (1), um dem einen oder mehreren Benutzern (5) zu ermöglichen, das System mit berührungslosen Gesten zu steuern;
einen Gesten-Sensor zur Erzeugung von RGB- und/oder Tiefenbildern;
ein Softwaremodul zur Verarbeitung von Gestensensordaten und zur Erkennung von Benutzern und/oder Benutzergesten;
ein Softwaremodul zur Erzeugung eines Skeletts und/oder einer Silhouette des Benutzers; und/oder
ein Softwaremodul zum Reagieren auf erkannte Gesten.

10. Das System nach einem der vorhergehenden Ansprüche,
wobei die virtuelle Benutzerrepräsentation (3) das Geschlecht, das Alter und/oder die ethnische Zugehörigkeit des entsprechenden Benutzers (5) widerspiegelt.

11. Verfahren zum Betreiben eines berührungslosen, gestengesteuerten Anzeigesystems, wobei das System eine Anzeige (2) zur Anzeige einer oder mehrerer virtueller Benutzerrepräsentationen (3) umfasst, die jeweils einem Benutzer (5) entsprechen, der sich in der Nähe der Anzeige (2) befindet, wobei die virtuelle Benutzerrepräsentation die Position des Benutzers spiegelt, wobei das Verfahren
**dadurch gekennzeichnet ist, dass** es umfasst:
Anzeigen einer virtuellen Steuerposition (4); und
Anzeigen einer visuellen Indikation (6), um den Benutzer (5) zu einer Position zu leiten, von der aus das System durch den Benutzer gesteuert werden kann, die der virtuellen Steuerposition (4) entspricht.

12. Computerprogramm mit Anweisungen zur Implementierung des Verfahrens nach Anspruch 11.

## Revendications

1. Un système d'affichage contrôlé par gestes sans contact, comprenant :
un afficheur (2) pour l'affichage d'une ou plusieurs représentations d'utilisateur virtuel (3) correspondant chacune à un utilisateur (5) situé au voisinage de l'afficheur (2), la représentation d'utilisateur virtuel répliquant la position de l'utilisateur ;
**caractérisé en ce que** :
le système est configuré pour afficher une position de contrôle virtuel (4) et est en outre configuré pour afficher une indication visuelle (6) destinée à orienter l'utilisateur (5) vers une position depuis laquelle le système peut être contrôlé par l'utilisateur, qui corresponde à la position de contrôle virtuel (4).

2. Le système de la revendication 1,
dans lequel le système est en outre configuré pour déplacer la représentation d'utilisateur virtuel (3) sur l'afficheur en fonction du déplacement de l'utilisateur.

3. Le système selon la revendication 1 ou 2,
dans lequel le système est en outre configuré pour refléter un déplacement de la tête de l'utilisateur, tel qu'un hochement et/ou un déplacement latéral, sur la représentation d'utilisateur virtuel (3).

4. Le système selon l'une des revendications précédentes,
dans lequel l'indication visuelle (6) comprend un élément graphique qui relie la base de la représentation d'utilisateur virtuel à la position de contrôle virtuel ;
dans lequel l'indication visuelle (6) comprend de préférence une ou plusieurs flèches, plus préférablement une pluralité de flèches.

5. Le système selon l'une des revendications précédentes,
dans lequel le système est en outre configuré pour l'affichage d'une ou plusieurs mains (7) et/ou bras de la représentation d'utilisateur virtuel (3), correspondant à un emplacement physique des mains et/ou des bras de l'utilisateur (5), et est en outre configuré pour cartographier le déplacement de la main et/ou du bras de l'utilisateur, de préférence pour cartographier le déplacement de l'épaule, du coude et de la main de l'utilisateur.

6. Le système selon l'une des revendications précédentes,
dans lequel le système est en outre configuré pour afficher au moins un élément de contrôle graphique (8), tel qu'un bouton ;
dans lequel le système est de préférence configuré pour afficher deux éléments de contrôle graphique (8), chaque élément de contrôle graphique étant affiché au-dessus d'une main correspondante (7) de la représentation d'utilisateur virtuel (3).

7. Le système selon la revendication 6,
dans lequel le système est en outre configuré pour afficher au moins une indication virtuelle (9) incitant l'utilisateur (5) à sélectionner l'au moins un élément de contrôle graphique (8) ;
dans lequel l'au moins une indication virtuelle (9) comprend de préférence un élément graphique qui relie une main (7) de la représentation d'utilisateur virtuel (3) à l'au moins un élément de contrôle graphique (8) ;
dans lequel l'indication visuelle (9) comprend de préférence une ou plusieurs flèches, plus préférentiellement une pluralité de flèches.

8. Le système selon l'une des revendications précédentes,
dans lequel le système d'affichage contrôlé par gestes sans contact peut être utilisé dans des emplacements publics, les emplacements publics étant des vitrines de magasin, des boutiques, et/ou des stands de salons ; et/ou
dans lequel le système d'affichage contrôlé par gestes sans contact est un système fixe ; et/ou
dans lequel le système d'affichage contrôlé par gestes sans contact est logé dans un seul et même boîtier ; et/ou
dans lequel le système d'affichage contrôlé par gestes sans contact comprend un système de rétroprojection ; et/ou
dans lequel l'afficheur (2) comprend une zone d'affichage ayant une hauteur d'approximativement au moins 32 pouces, ou d'approximativement au moins 60 pouces.

9. Le système selon l'une des revendications précédentes, comprenant en outre au moins l'un d'entre :
un système sonore pour produire des instructions audio ;
un module de contrôle de gestes (1) pour permettre aux un ou plusieurs utilisateurs (5) de contrôler le système par des gestes sans contact ;
un capteur de gestes pour générer des images RVB et/ou en profondeur ;
un module logiciel pour traiter des données de capteur de gestes et pour détecter des utilisateurs et/ou des gestes d'utilisateur ;
un module logiciel pour générer un squelette et/ou une silhouette de l'utilisateur ; et/ou
un module logiciel pour réagir aux gestes détectés.

10. Le système selon l'une des revendications précédentes,
dans lequel la représentation d'utilisateur virtuel (3) reflète le sexe, l'âge et/ou l'origine ethnique de l'utilisateur correspondant (5).

11. Un procédé de mise en œuvre d'un système d'affichage contrôlé par gestes sans contact, le système comprenant un afficheur (2) pour l'affichage d'une ou plusieurs représentations d'utilisateur virtuel (3) correspondant chacune à un utilisateur (5) situé au voisinage de l'afficheur (2), la représentation d'utilisateur virtuel répliquant la position de l'utilisateur, dans lequel le procédé est **caractérisé en ce qu'**il comprend :
l'affichage d'une position de contrôle virtuel (4) ; et
l'affichage d'une indication visuelle (6) pour orienter l'utilisateur (5) vers une position à partir de laquelle le système peut être contrôlé par l'utilisateur, qui correspond à la position de contrôle virtuel (4).

12. Un programme informatique comprenant des instructions pour l'implémentation du procédé de la revendication 11.
